# EUROPÄISCHE PATENTSCHRIFT

(11) **EP 1 236 922 B1**
(45) Veröffentlichungstag und Bekanntmachung des Hinweises auf die Patenterteilung: **19.11.2003**
(21) Anmeldenummer: 02001399.1
(22) Anmeldetag: 19.01.2002
(51) Int. Cl.: F16D 65/16

(54) **Elektromechanische Fahrzeugbremse**
Electromechanically operated vehicle brake
Frein de véhicule à commande électromécanique

(30) Priorität: 26.02.2001 DE 10109305
(43) Veröffentlichungstag der Anmeldung: 04.09.2002
(73) Patentinhaber: DaimlerChrysler AG, 70567 Stuttgart (DE)
(72) Erfinder: Reichle, Stephan, 73760 Ostfildern (DE); Staiger, Wolfgang , Dr., 70188 Stuttgart (DE); Fischer, Jörg, 73733 Esslingen (DE); Frey, Gerhard, 73733 Esslingen (DE); Marcovic, Thomas, 70190 Stuttgart (DE); Schäfer, Ralf, 70186 Stuttgart (DE); Wippermann, Michael, 70794 Filderstadt (DE)

(56) Entgegenhaltungen:
- EP-A- 0 949 433
- WO-A-98/26968
- DE-A- 4 032 885
- US-A- 5 697 474

## Beschreibung

Die Erfindung betrifft eine elektromechanische Fahrzeugbremse nach dem Oberbegriff des Anspruches 1.

Aus der Druckschrift EP 949 433 A2 ist eine elektromechanische Fahrzeugbremse bekannt, welche eine elektrische Betätigungseinrichtung umfasst, die einen im Gehäuse der Bremse schwenkbar gelagerten Zuspannhebel axial beaufschlagt und dadurch den Zuspannhebel in eine teilkreisförmige Bewegungsbahn zwingt und eine Bremsbacke gegen eine Bremsscheibe andrückt. Die elektrische Betätigungseinrichtung umfasst ein translatorisch verschiebbares Betätigungselement, dessen Schiebe-Stellbewegung elektrisch steuerbar ist. Eine Stirnseite des Betätigungselementes beaufschlagt den Zuspannhebel an einer Stelle, welche mit Abstand zur Drehachse des Zuspannhebels liegt, wodurch ein den Zuspannhebel in Richtung der Bremsbacke verstellendes Drehmoment generiert wird. Der Zuspannhebel ist im Bereich seiner Kontaktstelle zum Betätigungselement kreisförmig ausgebildet, wohingegen das Betätigungselement eine ebene Stirnfläche aufweist. Bei einer translatorischen Stellbewegung des Betätigungselementes führt der Zuspannhebel auf Grund seiner gehäuseseitigen, schwenkbaren Lagerung im Bereich des Kontaktpunktes zum Betätigungselement eine vertikal zur Stellrichtung des Betätigungselementes gerichtete Relativbewegung aus, wobei auf Grund von Reibung im Kontaktpunkt Querkräfte erzeugt werden, welche quer zur Stellrichtung des Betätigungselementes wirken und dieses in seiner Lagerung im Fahrzeugbremsengehäuse verklemmen können.

Ferner ist aus der US 5 697 474 eine pneumatisch betätigte Fahrzeugbremse bekannt, wobei das Betätigungselement mittels einem pneumatisch bewegten Teil gebildet. Die Bewegung des Betätigungselemets wird über den Übertragungshebel auf den Zuspannhebel übertragen. Auch hier können Querkräfte auf das Betätigungselement quer zur seiner Bewegungsrichtung einwirken. Der Erfindung liegt das Problem zugrunde, eine elektromechanische Fahrzeugbremse zu schaffen, die sich durch eine hohe Zuverlässigkeit auszeichnet und bei der insbesondere die Gefahr des Verklemmens eines beweglichen Bauteils eliminiert bzw. zumindest reduziert ist.

Dieses Problem wird erfindungsgemäß mit den Merkmalen des Anspruches 1 gelöst.

Die elektromechanische Fahrzeugbremse umfasst einen Elektromotor mit einem gehäusefesten Stator und einem umlaufenden Rotor, über den ein Betätigungselement translatorisch zu verstellen ist, beispielsweise eine Bremsspindel, die von einer Gewinde-.mutter umgriffen wird, welche vom Rotor angetrieben wird. Das translatorisch verschiebbare Betätigungselement ist Bestandteil einer 'kinematischen Kette, über die ein Bremsglied betätigt wird, welches auf eine Bremsscheibe einwirkt. Außer dem verschiebbaren Betätigungselement ist der kinematischen Kette ein Übertragungshebel, welcher unmittelbar von dem Betätigungselement beaufschlagt wird, sowie ein insbesondere schwenkbar gelagerter Zuspannhebel zugeordnet, der zwischen dem Übertragungshebel und dem Bremsglied liegt und die Bewegung des Übertragungshebels auf das Bremsglied weiterleitet.

Der Übertragungshebel ist am Bremsengehäuse vertikal zur translatorischen Stellrichtung des Betätigungselementes abgestützt, wodurch Querkräfte, die quer zur Stellrichtung des Betätigungselementes wirken, vom Gehäuse aufgenommen werden. Die Bewegungsmöglichkeiten des Übertragungshebels sind zumindest im Bereich der Kontaktstelle des Übertragungshebels zum Betätigungselement durch die Abstützung in Querrichtung zur Stellrichtung des Betätigungselementes eingeschränkt, so dass der Übertragungshebel zumindest in diesem Bereich vorteilhaft eine ebenfalls nur translatorische Bewegung, die gleichgerichtet ist wie die Bewegung des Betätigungselementes, ausführen kann. Dadurch wird jede Bewegung des Übertragungshebels im Bereich der Kontaktstelle zum Betätigungselement in einer Richtung quer zur Stellrichtung des Betätigungselementes unterbunden, so dass auch keine Reibungskräfte in Querrichtung auf das Betätigungselement wirken können, sondern ausschließlich Stellkräfte in Stellrichtung des Betätigungselementes entstehen können. Da keine Querkräfte auf das Betätigungselement wirken, wird ein Verklemmen und Verspannen des Betätigungselementes in seiner Lagerung vermieden.

In zweckmäßiger Weiterbildung ist eine gehäusefeste Führungsschiene vorgesehen, in der der Übertragungshebel translatorisch in Richtung der Stellbewegung des Betätigungselementes geführt ist. Weiterhin kann der Übertragungshebel über ein Gelenk schwenkbar am Gehäuse gelagert sein, welches insbesondere in der Führungsschiene geführt ist, beispielsweise über eine Rollenlagerung. Die gelenkige Lagerung des Übertragungshebels am Gehäuse stellt einen zusätzlichen Freiheitsgrad für den Übertragungshebel dar, welcher es diesem ermöglicht, die translatorische Schiebebewegung des Betätigungselementes in die rotatorische Schwenkbewegung des Zuspannhebels ohne Relativverschiebung im Kontaktpunkt zwischen Übertragungshebel und Zuspannhebel umzusetzen. Durch die Rollenlagerung des Gelenks in der Führungsschiene werden Reibungskräfte, die auf den Übertragungshebel in Stellrichtung des Betätigungselementes einwirken, minimiert.

Vorteilhaft stoßen der Übertragungshebel und das Betätigungselement stirnseitig nur lose aneinander, um die Übertragung jeglicher Querkräfte quer zur Stellrichtung zu vermeiden. Der Zuspannhebel kann in Richtung einer Lösestellung der Bremse kraftbeaufschlagt sein, so dass der Übertragungshebel in jeder Position der kinematischen Kette zwischen Betätigungselement und Bremsscheibe gegen die Stirnseite des Betätigungselementes angedrückt wird und ein unerwünschtes Spiel zwischen Betätigungselement und Übertragungshebel vermieden werden kann.

Die Verbindung zwischen dem Übertragungshebel und dem Zuspannhebel kann entweder über ein Gelenk realisiert werden oder in einer alternativen Ausführung dadurch bewerkstelligt werden, dass das dem Betätigungselement abgewandte Ende des Übertragungshebels in eine Ausnehmung im Zuspannhebel lose einragt, wobei die letztere Ausführung sich durch eine einfache Konstruktion auszeichnet.

Als von dem Elektromotor zu verstellendes, translatorisch verschiebbares Betätigungselement wird vorteilhaft entweder eine Bremsspindel oder - in kinematischer Umkehrung - eine die Bremsspindel umgreifende Spindelmutter verwendet. Im Falle der Bremsspindel als Betätigungselement läuft zweckmäßig die Spindelmutter mit dem Rotor des Elektromotors um, wobei diese Rotationsbewegung über die Gewindesteigung zwischen Spindelmutter und Bremsspindel in die translatorische Stellbewegung der Bremsspindel umgesetzt wird. Falls die Spindelmutter als Betätigungselement verwendet wird, läuft insbesondere die Bremsspindel mit dem Rotor um; die Spindelmutter wird bevorzugt durch eine gehäusefeste Führung an einer Rotation gehindert, wodurch eine translatorische Stellbewegung der Spindelmutter erzielt wird.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch eine elektromechanische Fahrzeugbremse mit einem Elektromotor, der eine im Rotor des Elektromotors gelagerte Bremsspindel translatorisch verschiebt, wobei die Stellbewegung der Bremsspindel über einen Übertragungshebel auf einen Zuspannhebel der Fahrzeugbremse übertragen wird,
- Fig. 2: eine schematische Darstellung einer elektromechanischen Fahrzeugbremse, bei der ebenfalls die Bremsspindel translatorisch verschoben und als Betätigungselement für den Übertragungshebel verwendet wird,
- Fig. 3: eine schematische Darstellung einer Fahrzeugbremse in einer alternativen Ausführung, bei der die Spindelmutter als translatorisch verschiebbares Betätigungselement verwendet wird.

In den folgenden Figuren sind gleiche Bauteile mit gleichen Bezugszeichen versehen.

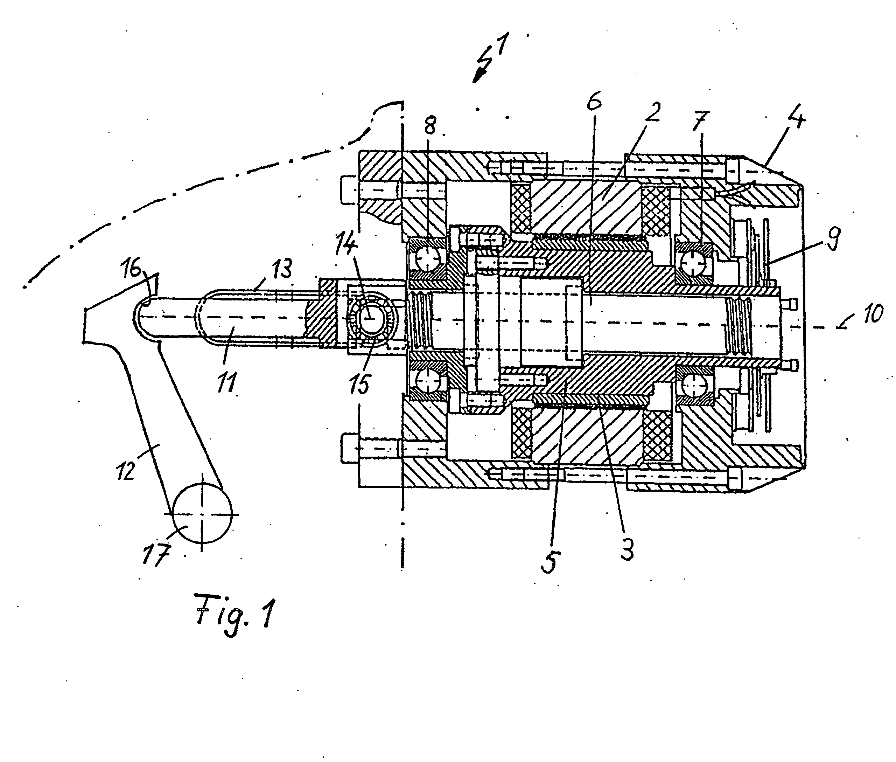

Die in Fig. 1 dargestellte Fahrzeugbremse 1 umfasst einen in einem Gehäuse 4 angeordneten Elektromotor mit einem gehäusefesten Stator 2 und einem Rotor 3, der gegenüber dem Gehäuse 4 über Lager 7 und 8 abgestützt ist und als Hohlwelle ausgebildet ist. Im Rotor 3 ist ein Spindelantrieb gelagert, der eine Spindelmutter 5 und eine Bremsspindel 6 umfasst, die jeweils konzentrisch zum Rotor angeordnet sind. Die Spindelmutter 5 läuft drehfest mit dem Rotor 3 um, die Bremsspindel 6 ist relativ zum Rotor 3 drehbar gelagert. Auf Grund der Gewindesteigung wird die Drehbewegung der Spindelmutter 5 in eine translatorische, in Richtung der Längsachse 10 der Bremsspindel 6 verlaufende Stellbewegung umgesetzt. Die Bremsspindel 6 übernimmt die Funktion eines translatorisch verschiebbaren Betätigungselementes, welches auf einen Bremssattel bzw. eine Bremsbacke wirkt, um einen Bremsdruck auf eine Bremsscheibe auszuüben und dadurch das Fahrzeug abzubremsen.

Um Informationen über den aktuellen Betriebszustand zu erhalten, ist an einem stirnseitigen Ende der Bremsspindel 6 eine Sensorik 9 vorgesehen, welche insbesondere die aktuelle translatorische Position der Bremsspindel 6 im Gehäuse 4 aufnimmt und an eine Regel- und Steuerungseinrichtung weiterleitet, in welcher Stellsignale zur Beaufschlagung des Elektromotors erzeugt werden. Über die Sensorik 9 können auch Signale aufgenommen werden, welche die Kraft repräsentieren, mit der der Elektromotor die Bremsspindel beaufschlagt. Es kann auch zweckmäßig sein, die Stromaufnahme des Elektromotors zu messen und aus der Stromaufnahme auf die Verschiebung der Bremsspindel zu schließen.

Die translatorische Stellbewegung der Bremsspindel 6 wird über einen Übertragungshebel 11, welcher an der der Sensorik 9 gegenüberliegenden Stirnseite der Bremsspindel 6 angeordnet ist, und einen Zuspannhebel 12 auf das Bremsglied der Fahrzeugbremse 1 übertragen. Bremsspindel 6, Übertragungshebel 11 und Zuspannhebel 12 bilden hierbei eine kinematische Kette, über die das aktuell benötigte Bremsmoment auf die Bremsscheibe der Fahrzeugbremse 1 aufgebracht wird.

Der Übertragungshebel 11 ist in einer gehäusefesten Führungsschiene 13 translatorisch in Richtung der Stellbewegung der Bremsspindel 6 - also in Richtung der Längsachse 10 der Bremsspindel - geführt. Die Führungsschiene 11 erstreckt sich koaxial zur Längsachse 10 der Bremsspindel 6. Die Führung erfolgt über ein Gelenk 14 des Übertragungshebels 11, welches über eine Rollenlagerung 15 translatorisch in der Führungsschiene 13 verschoben werden kann. Der Übertragungshebel 11 ist somit in der Lage, sowohl eine Schwenkbewegung um die Drehachse des Gelenks 14 als auch eine translatorische Bewegung in Richtung der Längsachse 10 der Bremsspindel 6 auszuführen. Das Gelenk 14 des Übertragungshebels 11 stößt unmittelbar an eine Stirnseite der Bremsspindel 6 an und wird über die Bremsspindel 6 translatorisch verschoben. Auf Grund der Linearführung in der Führungsschiene 13 werden auf den Übertragungshebel 11 wirkende Querkräfte über das Gelenk 14 auf die gehäusefeste Führungsschiene 13 übertragen. Insbesondere in dem Fall, dass die einander zugewandten Stirnseiten von Übertragungshebel 11 und Bremsspindel 6 nur lose aneinander stoßen, wird die Übertragung von Querkräften von dem Übertragungshebel 11 auf die Bremsspindel 6 vermieden.

Die der Bremsspindel 6 abgewandte Stirnseite des Übertragungshebels 11 ist abgerundet ausgeführt und ragt in eine konkav geformte Ausnehmung 16 im Zuspannhebel 12 ein. Die Ausnehmung 16 liegt mit Abstand zu einem Gelenk 17, über das der Zuspannhebel 12 mit dem Gehäuse 4 der Fahrzeugbremse schwenkbar verbunden ist. Bei einer Bremsenbetätigung wird die Bremsspindel 6 in Richtung des Übertragungshebels 11 translatorisch verschoben, wobei diese Stellbewegung über den Übertragungshebel 11 auf den Zuspannhebel 12 umgesetzt wird, der hierbei eine Teilkreisbewegung ausführt. Auf Grund der Teilkreisbewegung des Zuspannhebels 12 nimmt der Übertragungshebel 11 mit zunehmender Stellbewegung eine gegenüber der Längsachse 10 winklige Position mit größer werdendem Relativwinkel ein.

Der Zuspannhebel 12 ist zweckmäßig in Richtung des Übertragungshebels 11 federbelastet, so dass bei einem Lösen der Fußbremse und einer entsprechenden Bewegung der Bremsspindel 6 in eine zurückgenommene Position die Stirnseiten von der Bremsspindel 6 und dem Übertragungshebel 11 und auch die gegenüberliegende Stirnseite des Übertragungshebels 11 in der Ausnehmung 16 im Zuspannhebel 12 immer in Kontakt bleiben.

Alternativ zu der in Fig. 1 gezeigten losen Verbindung von Übertragungshebel 11 und Zuspannhebel 12 durch Eingreifen der Stirnseite des Übertragungshebels in eine Ausnehmung im Zuspannhebel kann auch eine gelenkige Verbindung zwischen den beiden Hebeln vorgesehen sein.

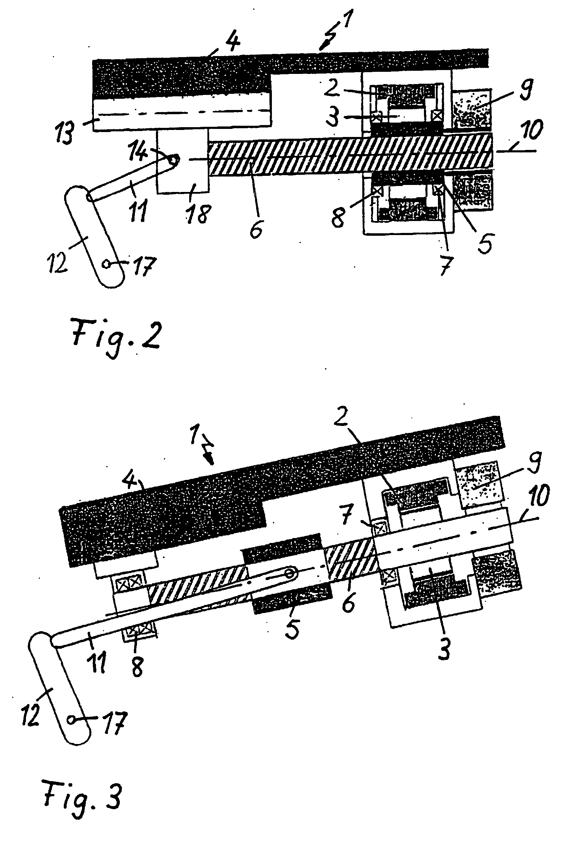

Auch bei dem in Fig. 2 dargestellten Ausführungsbeispiel wird die Bremsspindel 6 von dem Elektromotor translatorisch in Richtung der Längsachse 10 der Bremsspindel verstellt. Im Unterschied zum vorhergehenden Ausführungsbeispiel beaufschlagt eine Stirnseite der Bremsspindel 6 einen Kontaktblock 18, welcher über das Gelenk 14 mit dem Übertragungshebel 11 gekoppelt ist und der in der Führungsschiene 13 translatorisch verschieblich parallel zur Längsachse 10 geführt ist, wobei die fest mit dem Gehäuse 4 verbundene Führungsschiene 13 nicht koaxial zur Bremsspindel 6, sondern parallel zu dieser versetzt angeordnet ist, wodurch sich eine geringere Baulänge realisieren läßt.

Bei dem in Fig. 3 dargestellten Ausführungsbeispiel wird die Bremsspindel 6 translatorisch ortsfest gehalten und vom Rotor 3 in Drehungen versetzt. Das Betätigungselement ist in diesem Fall die auf der Bremsspindel 6 aufsitzende Spindelmutter 5, welche auf Grund der Gewindesteigung bei einer Rotation der Bremsspindel 6 translatorisch entlang der Längsachse 10 verstellt wird. Der Übertragungshebel 11 ist an die Spindelmutter 5 gekoppelt, insbesondere gelenkig gekoppelt, und überträgt die translatorische Stellbewegung der Spindelmutter auf den Zuspannhebel 12, der im Gelenk 17 schwenkbar am Gehäuse der Bremse gelagert ist.

Es kann zweckmäßig sein, den Übertragungshebel 11 in Querrichtung vertikal zur Längsachse 10 gehäusefest abzustützen, wobei in diesem Fall die Ankopplung an die Spindelmutter 5 vorteilhaft nicht über ein Gelenk, sondern wie in den vorbeschriebenen Beispielen als loser, stirnseitiger Kontakt ausgeführt wird.

Die elektromechanische Fahrzeugbremse wird bevorzugt in Nutzfahrzeugen eingesetzt. Es kommt aber auch ein Einsatz in Personenkraftwagen in Betracht.

Als weitere, jedoch nicht dargestellte Ausführung kann es zweckmäßig sein, als Übertragungshebel eine gekrümmte Zahnstange vorzusehen, die an der Spitze des Zuspannhebels angekoppelt ist und über ein Stirnradgetriebe mit dem Elektromotor verbunden ist. Der Krümmungsradius der Zahnstange entspricht dem Radius des Kreisbogens der von dem Zuspannhebel beschrieben wird.

## Patentansprüche

1. Elektromechanische Fahrzeugbremse, insbesondere für Nutzfahrzeuge, mit einem Elektromotor, der ein Betätigungselement translatorisch antreibt, welches einen Zuspannhebel (12) beaufschlagt, der ein auf eine Bremsscheibe wirkendes Bremsglied betätigt,
**dadurch gekennzeichnet,**
**dass** zwischen dem.Betätigungselement und dem Zuspannhebel (12) ein Übertragungshebel (11) vorgesehen ist, der in einer Richtung vertikal zur translatorischen Stellrichtung des Betätigungselementes an einem Gehäuse (4) der Fahrzeugbremse (1) abgestützt ist. nach Anspruch 1,

2. Fahrzeugbremse nach Anspruch 1,
**dadurch gekennzeichnet,**
**dass** der Übertragungshebel (11) in einer gehäusefesten Führungsschiene (13) translatorisch in Richtung der Stellbewegung des Betätigungselementes geführt ist.

3. Fahrzeugbremse nach Anspruch 1 oder 2,
**dadurch gekennzeichnet,**
**dass** der Übertragungshebel (11) über ein Gelenk (14) schwenkbar am Gehäuse (4) gelagert ist.

4. Fahrzeugbremse nach Anspruch 3,
**dadurch gekennzeichnet,**
**dass** das Gelenk (14) über eine Rollenlagerung (15) in der Führungsschiene (13) geführt ist.

5. Fahrzeugbremse nach einem der Ansprüche 1 bis 4,
**dadurch gekennzeichnet,**
**dass** der Übertragungshebel (11) und das Betätigungselement stirnseitig lose aneinander stoßen.

6. Fahrzeugbremse nach einem der Ansprüche 1 bis 5,
**dadurch gekennzeichnet,**
**dass** der Übertragungshebel (11) über ein Gelenk schwenkbar mit dem Zuspannhebel (12) gekoppelt ist.

7. Fahrzeugbremse nach einem der Ansprüche 1 bis 5,
**dadurch gekennzeichnet,**
**dass** das dem Betätigungselement abgewandte Ende des Übertragungshebels (11) in eine Ausnehmung (16) im Zuspannhebel (12) lose einragt.

8. Fahrzeugbremse nach einem der Ansprüche 1 bis 7,
**dadurch gekennzeichnet,**
**dass** das Betätigungselement eine Bremsspindel (6) ist, deren eine Stirnseite den Übertragungshebel (11) beaufschlagt.

9. Fahrzeugbremse nach einem der Ansprüche 1 bis 7,
**dadurch gekennzeichnet,**
**dass** das Betätigungselement eine Spindelmutter (5) ist.

10. Fahrzeugbremse nach einem der Ansprüche 1 bis 9,
**dadurch gekennzeichnet,**
**dass** der Zuspannhebel (12) schwenkbar im Gehäuse (4) der Fahrzeugbremse (1) gelagert ist.

## Claims

1. Electro-mechanical vehicle brake, in particular for utility vehicles, with an electric motor which drives an activating element in a translatory way which impacts a tightening lever (12) which activates a braking member acting on a brake disc
**characterised in that**
between the activating element and the tightening lever (12) a transfer lever (11) is provided which is supported in a direction vertical to the translatory adjustment direction of the activating element on a case (4) of the vehicle brake (1).

2. Vehicle brake according to claim 1
**characterised in that**
the transfer lever (11) is guided in a guide track (13) fixed on the case in a translatory way in the direction of the adjustment movement of the activating element.

3. Vehicle brake according to claim 1 or 2
**characterised in that**
the transfer lever (11) is mounted by means of a joint (14) on the case (4) in such a way that it can be swivelled.

4. Vehicle brake according to claim 3
**characterised in that**
the joint (14) is guided by means of a roller bearing (15) in the guide track (13).

5. Vehicle brake according to one of the claims 1 to 4
**characterised in that**
the transfer lever (11) and the activating element loosely impact against each other on the front side.

6. Vehicle brake according to one of the claims 1 to 5
**characterised in that**
the transfer lever (11) is coupled by means of a joint in such a way that it can be swivelled with the tightening lever (12) .

7. Vehicle brake according to one of the claims 1 to 5
**characterised in that**
the end of the transfer lever (11) turned away from the activating element projects into a recess (16) in the tightening lever (12).

8. Vehicle brake according to one of the claims 1 to 7
**characterised in that**
the activating element is a brake spindle (6), whose one front side impacts the transfer lever (11).

9. Vehicle brake according to one of the claims 1 to 7
**characterised in that**
the activating element is a spindle nut (5).

10. Vehicle brake according to one of the claims 1 to 9
**characterised in that**
the tightening lever (12) is mounted in a swivelling way in the case (4) of .+the vehicle brake (1).

## Revendications

1. Frein de véhicule à commande électromécanique, en particulier pour des véhicules utilitaires, avec un moteur électrique entraînant en translation un élément d'actionnement qui agit sur un levier d'application du frein (12) actionnant un élément de freinage qui agit sur un disque de frein, **caractérisé en ce qu'**entre l'élément d'actionnement et le levier d'application du frein (12) est prévu un levier de transmission (11), qui, dans une direction, est appuyé verticalement par rapport à la direction de réglage en translation de l'élément d'actionnement sur un boîtier (4) du frein de véhicule (1).

2. Frein de véhicule selon la revendication 1, **caractérisé en ce que** le levier de transmission (11) est guidé en translation en direction du mouvement de réglage de l'élément d'actionnement dans un rail de guidage (13) solidaire avec le boîtier.

3. Frein de véhicule selon la revendication 1 ou 2, **caractérisé en ce que** le levier de transmission (11) est logé de manière pivotante sur le boîtier (4) par l'intermédiaire d'une articulation (14).

4. Frein de véhicule selon la revendication 3, **caractérisé en ce que** l'articulation (14) est guidée dans le rail de guidage (13) à l'aide d'un logement à rouleaux (15).

5. Frein de véhicule selon l'une quelconque des revendications 1 à 4, **caractérisé en ce que** le levier de transmission (11) et l'élément d'actionnement se touchent librement du côté frontal.

6. Frein de véhicule selon l'une quelconque des revendications 1 à 5, **caractérisé en ce que** le levier de transmission (11) est couplé de manière pivotante avec le levier d'application du frein (12) par l'intermédiaire d'une articulation.

7. Frein de véhicule selon l'une quelconque des revendications 1 à 5, **caractérisé en ce que** l'extrémité du levier de transmission (11), qui est opposée à l'élément d'actionnement, pénètre librement dans un évidement (16) du levier d'application du frein (12).

8. Frein de véhicule selon l'une quelconque des revendications 1 à 7, **caractérisé en ce que** l'élément d'actionnement est une vis de frein (6), dont l'un des côtés frontaux agit sur le levier de transmission (11).

9. Frein de véhicule selon l'une quelconque des revendications 1 à 7, **caractérisé en ce que** l'élément d'actionnement est un écrou de vis de frein (5).

10. Frein de véhicule selon l'une quelconque des revendications 1 à 9, **caractérisé en ce que** le levier d'application du frein (12) est logé de manière pivotante dans le boîtier (4) du frein de véhicule (1).
